# EUROPEAN PATENT APPLICATION

(11) **EP 2 156 809 A2**
(43) Date of publication of application: **24.02.2010**
(21) Application number: 09252030.3
(22) Date of filing: 20.08.2009
(51) Int. Cl.: A61C 1/00

(54) **Periodontal laser treatment and laser applicator**

(30) Priority: 20.08.2008 US 90458 P
(71) Applicant: Patholase Inc., Chico CA 95973 (US)
(72) Inventor: Harris, David M., Lynwood, WA 98036 (US); Strisower, John, Chico, CA 95973 (US)
(74) Representative: Carter, Stephen John

(57) **Abstract**

An antimicrobial light treatment is provided as preventative maintenance for or treatment of periodontal diseases. The light treatment may be administered to a patient with an applicator (41) that is similar in shape to a periodontal probe. The antimicrobial light energy may be applied at the time a dentist or clinician takes periodontal probe measurements. An applicator is provided for delivery of the antimicrobial light treatment. The applicator may include, for example, an ergonomic handpiece (42) and a probe (47). A light source (34), such as a laser source, may be attached to the handpiece (42). The probe (47) includes a tip (52) that is designed to deliver light energy from the light source (34) to the periodontium of a patient, for example to the gingival sulcus of a patient. The tip (52) is designed to disperse light energy in a broad pattern so that a large portion of the gingival sulcus may be treated.

## Description

### CROSS-REFERENCES TO RELATED APPLICATIONS

This application claims the benefit of provisional application No. 61/090,458 (Attorney Docket No. 027515-000300US) filed on August 20, 2008, the full disclosure of which is incorporated herein by reference.

### BACKGROUND

Gum disease, or periodontal disease, is commonly associated with the presence of microbial pathogens within the gingival sulcus, an area of space between a tooth and the surrounding gingival tissue. The normal depth of the sulcus ("sulcular depth") is three millimeters or less, but the microbiological pathogens are often located within pockets formed within the gingival sulcus that are deeper than three millimeters.

When the sulcular depth is in excess of three millimeters on a constant basis, the microbiological pathogens tend to accumulate and pose a danger to the periodontal fibers attaching the gingiva to the tooth. Gingivitis is a periodontal condition of inflammation within the superficial layers of the periodontium. Periodontitis is advanced gingivitis, whereby the inflammation is extended to the underlying tooth supporting structures and other deep periodontal tissues. Attachment loss and gum recession are symptomatic of advanced gingivitis or periodontitis, and can leave extremely sensitive portions of underlying tooth supporting structures exposed.

Ultimately, periodontitis leads to the destruction of both supra-alveolar and periodontal fibers, as well as the adjacent portion of the alveolar bone which generally provides for the attachment of healthy soft periodontal tissue to the cementum. When the soft periodontal tissue becomes inflamed as a result of bacteria, the edematous and junctional epithelium recedes away from the cementum creating an enlarged periodontal pocket and loss of attachment of the soft periodontal tissue to the cementum.

Periodontal disease has been correlated to several systemic conditions, such as cardiovascular disease and pancreatic cancer, and is thought to contribute to other heath problems including pre-term delivery and low infant birth weight for infants delivered from mothers having periodontal disease. While there is a neither comprehensive list of health related problems associated with periodontal disease nor a complete understanding as to whether periodontal disease is aggravated by other health conditions or *vice-versa,* it is commonly believed that periodontal disease can propose a health risk.

U.S. Patent No. 7,090,497, owned by the assignee of the present disclosure, describes a method of periodontal laser treatment in which microbiological pathogens are selectively radiated with high-energy antimicrobial laser pulses. These laser pulses are strongly absorbed by the microbiological pathogens and are substantially transparent to the periodontal tissues.

U.S. Patent No. 5,642,997 to Gregg et al. discloses a method for removing gingival pockets using a laser procedure. Other procedures for using lasers to treat periodontal diseases are known. However, applicants are not aware of an antimicrobial laser or light treatment for prevention of periodontal diseases.

### BRIEF SUMMARY

The following presents a simplified summary of some embodiments of the invention in order to provide a basic understanding of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

In accordance with an embodiment, an antimicrobial light (e.g., laser) treatment is provided as preventative maintenance for periodontal diseases. The light treatment is selected so that microbiological pathogens that typically cause periodontal diseases are selectively radiated, with little to no damage to the periodontal tissues. The light treatment may be administered to a patient with an applicator that is similar in shape to a periodontal probe. The antimicrobial light energy may be applied at the time a dentist or clinician takes periodontal probe measurements.

In an embodiment, an applicator is provided for delivery of the antimicrobial light treatment. The applicator may include, for example, an ergonomic handpiece and a probe. A light source, such as a laser source, may be attached to the handpiece. The probe includes a tip that is designed to deliver light energy from the light source to the periodontium of a patient, for example to the gingival sulcus of a patient. In an embodiment, the tip is designed to disperse light energy in a broad pattern so that a large portion of the gingival sulcus may be treated.

In an embodiment, the amount of light energy that is provided at the gingival sulcus is determined based upon the depth of the gingival sulcus. For example, for a deeper pocket, more light energy is provided. Likewise, for a less deep pocket, less light energy is provided, or no treatment is provided at all. Bursts of light may be provided to a location so that cumulative light energy provides a treatment effect.

The applicator may include markings so that the technician may measure periodontal pocket depth at the same time that light treatment is provided. The applicator may be disposable so as to avoid cross contamination.

In an embodiment, a periodontal probe is provided having a tip for inserting into a gingival sulcus, and an optical fiber extending along the tip for providing a treatment of light energy pulses to a gingival sulcus into which the tip is inserted. The optical fiber may include a distal end that is configured to insert into a gingival sulcus, with the distal end comprising the tip and being configured to disperse light energy pulses laterally. As an example, the distal end may be tapered to provide lateral dispersion of light energy.

The periodontal probe may include a releasable connection structure for connecting the periodontal probe to a handpiece. To provide a light conduit between the handpiece and the probe, the optical fiber may include a light receiver configured to mate with a terminus of a light delivery system in the handpiece. The releasable connection structure may be, for example, a threaded collar.

The optical fiber for the probe may extend along an outer tube that supports the optical fiber and provides structural support for the tip. Markings may be included along the tip for indicating a depth of a gingival sulcus into which the tip is inserted.

In accordance with another embodiment, a device for light treatment of periodontal disease is provided, the device including a light source, a light delivery system connected to the light source, and an applicator connected to the light deliver system, the applicator comprising a periodontal probe. The periodontal probe includes a tip for inserting into a gingival sulcus and an optical fiber extending along the tip for providing a treatment of light energy pulses delivered from the light source via the light delivery system to the optical fiber, the light source irradiating a gingival sulcus into which the tip is inserted.

The light source may be a laser, and more particularly, a Nd:YAG laser. The optical fiber may be a distal end that is configured to insert into a gingival sulcus, wherein the distal end comprises the tip and is configured to disperse light energy pulses laterally.

In further embodiments, a method of examining gingival sulcus in a human patient is provided, including inserting a periodontal probe into a gingival sulcus; and irradiating light energy to the gingival sulcus via the periodontal probe to eradicate pathogens within the gingival sulcus. The method may include evaluating depth of the gingival sulcus utilizing the periodontal probe. In an embodiment, the amount of light energy provided is based upon the evaluated depth of the gingival sulcus.

In a further embodiment, a method of laser treatment is provided that results in prevention of periodontal disease.

In still another embodiment, a method of laser treatment is provided that results in reversal of periodontal disease, the method comprising application of laser treatment during periodontal probing.

Other features of the invention will become apparent from the following detailed description when taken in conjunction with the drawings, in which:

### BRIEF DESCRIPTION OF THE DRAWINGS

FIG. 1 is a representation of a section of a tooth and gingival tissue;

FIG. 2 is a diagrammatic representation of a laser system in accordance with an embodiment;

FIG. 3 is a diagrammatic representation of an applicator in accordance with an embodiment;

FIG. 4 is a diagrammatic representation of a tip for the probe of the applicator of FIG. 3 in accordance with an embodiment; and

FIG. 5 is a side view of a probe for the applicator of Fig. 3 in accordance with an embodiment.

### DETAILED DESCRIPTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described. In addition, to the extent that orientations of the embodiments are described, such as "top," "bottom," "front," "rear," "right," and the like, the orientations are to aid the reader in understanding the embodiment being described, and are not meant to be limiting.

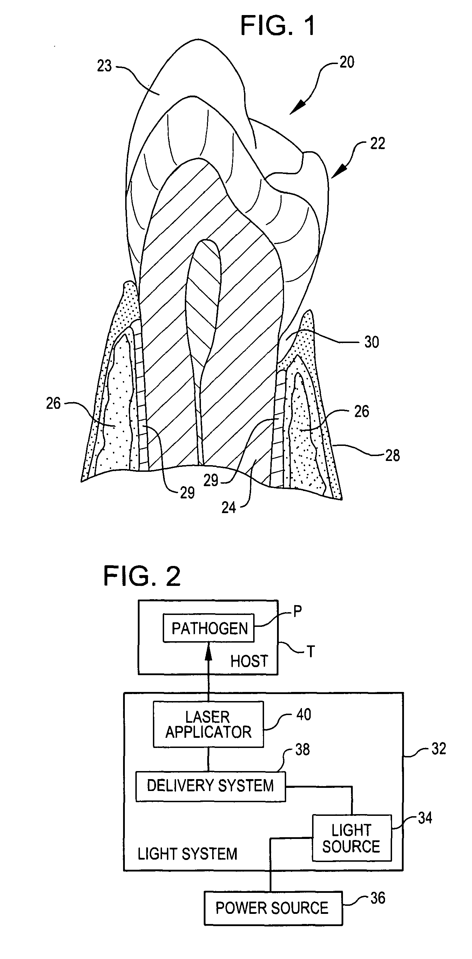

Referring now to the drawings, in which like reference numerals represent like parts throughout the several views, FIG. 1 illustrates a schematic representation of human dentition 20. A tooth 22 is shown having a crown 23 covered by enamel. A root composed of dentin 24 is covered by a thin layer of cementum. The root is connected to the alveolar bone 26 with periodontal ligament or connective tissue 29. The alveolar bone 26 is surrounded by epithelium 28, also known as the "gingiva."

The gingival sulcus 30 is an area of potential space between the tooth and surrounding gingival tissue. A healthy sulcular depth is 3mm or less. As the depth of the sulcus moves towards the root of the tooth, a gingival pocket may be formed, which may lead to gingivitis. If the depth continues to increase, a periodontal pocket may be formed. Typically, though not necessarily, a periodontal pocket is 5mm or greater in depth.

In accordance with an embodiment, a light system 32 (FIG. 2) is utilized for preventative maintenance of human dentition, such as the human dentition 20. The light system utilizes light to selectively kill or stop the growth of pathogens in the gingival tissue, and may utilize, for example, a laser as the light source for preventative treatment.

The light system 32 in FIG. 2 includes a light source 34. In an embodiment, the light source 34 is a laser. More specifically, in a particular embodiment, the light source 34 is a Nd:YAG laser source. Other options are described below. The laser source 34 is coupled to a power source 36 through an appropriate electrical connection to provide power to the laser source. The power source 36 may be a conventional AC outlet or may be batteries or another DC source.

The laser system 32 includes a delivery system 38 for delivering light energy from the laser source 34 to an applicator 40. The delivery system 38 may be, for example, mirrors, lenses, optical fibers, or any combination thereof. Preferably, optical fibers are utilized for the delivery system 38.

The applicator 40 is any device that is configured to interface with a target host, such as tissue T for treatment. One or more pathogens P are located in or on the host T for preferential irradiation by the light system 32.

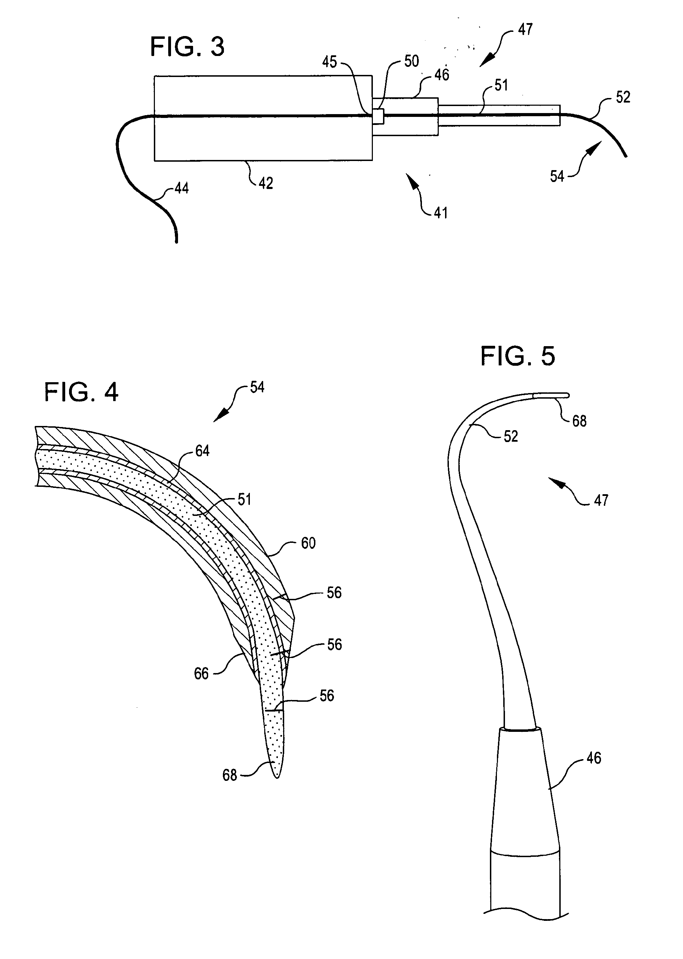

An embodiment of an applicator 41 is shown in FIG. 3. The applicator 41 includes a handpiece 42 connected to the delivery system 38 described above. The delivery system 38 in this example is an optical fiber 44 configured to deliver light energy from the laser source 34. The optical fiber 44 includes a terminus 45 within the handpiece 42.

A probe 47 is removably attached to the handpiece 42, for example by a releasable connection structure such as a connector. The probe 47 may be attached, for example, by a threaded collar 46 that fits onto external threads (not shown) in the handpiece 42. The probe 47 may be attached in a number of other connections, including friction fit, snap connection, fasteners, a bayonet connector, or other removable attachments. The probe 47 includes a light receiver 50 that is configured to mate with the terminus 45 and receive light energy from the terminus. As can be seen in FIG. 4, the light receiver 50 is connected to a fiber 51 that extends along the probe. The fiber 51 and the light receiver 50 may be a single optical fiber, or may be formed of separate parts that are connected together.

The applicator 41 is preferably formed so that it is ergonomically comfortable for a dentist or clinician to hold. To this end, the applicator 41 may be similar in shape to existing dental tools. In addition, the applicator 41 may take a number of different shapes depending upon the use of the applicator 41. In the embodiment described herein, the applicator 41 is utilized for providing laser treatment at the gingival sulcus 30, but the methods used herein may be utilized for other periodontal applications. For example, a laser treatment may be utilized to sterilize a root canal in a manner similar to the procedure described in U.S. patent number 4,979,900, "Root Canal Sterilization Method."

For the probe 47 that is utilized to provide treatment to the gingival sulcus 30, a bend 52 is included in a tip 54 of the probe to allow access around the tooth. Such a bend 52 is familiar to dentists and clinicians and may be found, for example, on contemporary periodontal probes.

As can be seen in FIG. 4, a tip 52 of the probe 47 may include markings 56. The markings may be utilized to measure pocket depths around the tooth in order to establish the state of health of the periodontium. Also, as described below, the depth of the periodontal pocket may be used to determine the dosimetry or how much energy is to be delivered into each pocket. The markings 56 inscribed unto the tip 54 make the measurements more accurate and easier for a dentist or clinician. The markings 56 may be provided, for example, at each millimeter, at three-millimeter increments, or as desired.

As can be seen in FIG. 4, the fiber 51 extends along the length of the probe 47 and to the tip 54. An outer tube 60, formed for example of stainless steel clad, acts as a sheath for the fiber 51 and provides structural support for the tip 54. The fiber 51 may be surrounded by an epoxy or a photopolymer compound 64 approved for dentistry.

As shown in FIG. 4, a distal end 68 of the fiber 51 extends out of the end of the outer tube 60. The outer tube 60 may include a tapered end 66, for example, 5mm, to 8mm in length, that provides a smooth transition between the exposed fiber distal end 68 and the rest of the outer tube 60. The fiber distal end 68 extending out of the outer tube 60 may be any desired length but in an embodiment is 1mm to 2mm in length.

In an embodiment, the fiber distal end 68 is etched so that it has a tapered surface that scatters light laterally. In typical fiber optics, an optical fiber with a blunt end disperses light energy directly out of a distal end of the fiber, without much dispersion. In contrast, the surface of the fiber distal end 68 has a taper so that refraction occurs and light energy is dispersed outward in a conical pattern. Preferably, the dispersion of the cone is as broad as possible, and more preferably energy from the fiber distal end 68 is sufficiently lateral so that there is even lateral dispersion along the exposed fiber distal end 68. As an example, the distal end may be tapered along 3-mm of a 300 micron diameter fiber ending in a 50 micron spherical radius. As an alternate to etching of the tip, the tip may include light dispersing tips such as is disclosed in either of U.S. Patent Numbers 6,893,432 to Intintoli et al. or 5,196,005 to Doiron et al.

An example of a shape for the probe 47 is shown in FIG. 5. The probe 47 shown there includes a threaded collar 46, a bend 52 having a radius of approximately 5mm, and 2mm of exposed distal end 68.

Although the probe 47 is described as being removable from the handpiece 42, a one-piece unit may be utilized. However, by making the probe 47 removable, the handpiece 42 is reusable, with the probe being replaced for a new user. If desired, the probe 47 may be sterilized, or may be disposable.

In use, the tip 54 of the probe 47 is positioned so that it provides light pressure into the gingival sulcus 60. The tip 54 is maintained parallel to the contours of the root 24 in the same manner as a conventional periodontal probe. The visible markings 56 indicate the measurement of the depth of the gingival sulcus.

In an embodiment, when the tip 54 is inserted, the fiber distal end 68 engages the bottom surface of the gingival sulcus 60. When the dentist or clinician has inserted the tip 54, light energy may be supplied by the light source 34. This light energy passes through the delivery system 38 (e.g., the laser fiber 44), through the handpiece 42 to the terminus 46. Light energy continues from the terminus 46 into the light receiver 50 and along the fiber 51. In an embodiment, the light receiver 50 is at least as large in diameter as the terminus 46 so that little to no light energy is lost. If desired, the light receiver 50 may be larger in diameter than the terminus 46 to ensure minimal loss. This feature is exaggerated in FIG. 3. Also, as stated above, the light receiver 50 and the fiber 51 may be formed as one piece. For example, in an embodiment, the light receiver 50 and the fiber 51 may be an optical fiber having a slightly larger diameter than the fiber 44 at the terminus 45. As an example, a 0.22 numerical aperture (NA) optical silica fiber may be used, with a diameter of 300µm.

Light energy traveling through the fiber 41 is dispersed by the fiber distal end 68 into the gingival sulcus. Because of the dispersion provided by the distal end 68, the light energy radiates outward, dispensing light in the sides of the gingival sulcus as well as the bottom.

In an embodiment, the light energy supplied by the light source 34 is selected to have a wavelength corresponding to a absorption spectrum of potential pathogens for periodontal diseases. In addition, the light source is preferably transmissive through periodontal tissues so that damage to the tissue does not occur as a result of the light treatment described herein. An example of such light energy is described in U.S. Patent No. 7,090,497, incorporated herein by reference, but other light energies may be utilized. In an embodiment, light energy is provided by laser light pulses having a wavelength of approximately 600nm to 1,100nm. Such laser pulses may be generated for many suitable light or laser source, including a Nd:YAG laser source (e.g., at 1064nm) as mentioned above, a solid-state laser diode, a gas or liquid laser source, or combinations thereof. In an embodiment, the light is provided as a pulse or a sequence of pulses, for example, with each pulse having 0 to 300mJ per pulse, and the duration of the pulses being 100usec in length. The pulses may be shorter in length, such as 50 to 70 usec. In an embodiment, the pulses are repeated at a rate of 2Hz to 50Hz as the fiber distal end 68 is moved back and forth along the root surface of the tooth as the fiber distal end is withdrawn from the pocket. In an embodiment, a burst of pulses may be delivered at a certain location then the probe is moved and another burst delivered and so on until the accumulated light dose of 5-20 Joules per mm pocket depth, per location, is delivered. These bursts may be applied, for example, at 80mJ, at 20Hz or 30 Hz, although other parameters may be used.

In an embodiment, based upon the depth of gingival sulcus indicated by the markings 56, the dentist or clinician may increase or decrease the amount of light treatment at the location. To this end, guidelines may be provided for a particular pulse train of light energy for each depth. In addition, if desired, if the gingival sulcus is under a particular threshold in depth (e.g., 3mm), no light energy may be provided at that location. In an embodiment, the laser energy is delivered at 5-20 Joules per millimeter of pocket depth, not to exceed 40 Joules per millimeter of pocket depth.

The lateral disbursement of light by the fiber distal end 68 provides treatment to a large area of the pocket adjacent to the tooth. Without lateral disbursement, only the bottom of the pocket may be treated, and thus problem pathogens may be missed. Increasing the lateral disbursement increases the chance that harmful pathogens are irradiated and killed. Increasing the dispersion of light increases the area irradiated, decreases the surface fluence (irradiance), and consequently decreases the probability of damage to normal tissues.

The treatment described herein may be utilized as part of a routine examination by a dentist or clinician. Most dentists already utilize a periodontal probe to examine depth of the gingival sulcus, and this procedure is performed as part of a routine examination, for example yearly or semiannually. The probe 47, described herein, may be utilized for this measurement procedure, and during such procedure, a light pulse or string of light pulses may be added as a preventative treatment. This pulse treatment may be supplied at the time of measuring the sulcus depth, or later. If desired, if a dentist or clinician measures a safe depth of the gingival sulcus (e.g., less than 3mm or less than 2mm), no light may be supplied. However, due to the nature of the light that has been selected, the periodontal tissue should not be harmed, and a potential future problem may be eliminated by supplying a moderate dose of light into the sulcus even at minimal depths.

Physical signs of periodontal infection include red, swollen, bleeding gums, gum degeneration and halitosis. These symptoms may be relieved by treatment with the antimicrobial light treatments and devices described herein. The methods and devices may also be used to improve the appearance of gingival tissues and rejuvenate gingival tissues.

After the probe 47 is used on an individual, it may be removed from the handpiece 42 and sterilized or thrown away. Typically, prolonged use of the probe 47 may result in degradation of the optical properties of the fiber distal end 68, requiring replacement of the probe, for example after each pocket or quadrant of a patient's mouth has been treated. Thus, after removal, a new probe 47 may be attached to the handpiece 42, and the procedure may be performed on the next quadrant of the patient's mouth.

In an alternate embodiment, the light system 32 and its power source 36 are contained within the handpiece 42. In this embodiment, the power source 36 is one or more rechargeable or disposable batteries, and the light source is smaller, for example a laser diode. The power source 36 may alternatively be tethered to the handpiece 42. In such case, the power source 36 may be AC or standalone, such as DC batteries.

Other variations are within the spirit of the present invention. Thus, while the invention is susceptible to various modifications and alternative constructions, a certain illustrated embodiment thereof is shown in the drawings and has been described above in detail. It should be understood, however, that there is no intention to limit the invention to the specific form or forms disclosed, but on the contrary, the intention is to cover all modifications, alternative constructions, and equivalents falling within the spirit and scope of the invention, as defined in the appended claims.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

## Claims

1. A periodontal probe, comprising:
a tip for inserting into a gingival sulcus; and
an optical fiber extending along the tip for providing a treatment of light energy pulses to a gingival sulcus into which the tip is inserted.

2. The periodontal probe of claim 1, further comprising a releasable connection structure for connecting the periodontal probe to a handpiece.

3. The periodontal probe of claim 3, wherein the optical fiber comprises a light receiver configured to mate with a terminus of a light delivery system in the handpiece.

4. The periodontal probe of claims 1 to 3, wherein the optical fiber extends along an outer tube that supports the optical fiber and provides structural support for the tip.

5. The periodontal probe of claims 1 to 4, wherein the optical fiber comprises a distal end that is configured to insert into a gingival sulcus, and wherein the distal end comprises the tip and is configured to disperse light energy pulses laterally.

6. The periodontal probe of claim 5, wherein the distal end is tapered to provide lateral dispersion of light energy.

7. The periodontal probe of claims 1 to 6, further comprising markings along the tip for indicating a depth of a gingival sulcus into which the tip is inserted.

8. A device for light treatment of periodontal disease, comprising:
a light source;
a light delivery system connected to the light source;
an applicator connected to the light deliver system, the applicator comprising a periodontal probe, the periodontal probe comprising:
a tip for inserting into a gingival sulcus; and
an optical fiber extending along the tip for providing a treatment of light energy pulses delivered from the light source via the light delivery system to the optical fiber, the light source irradiating a gingival sulcus into which the tip is inserted.

9. The device of claim 8, wherein the light source comprises a laser.

10. The device of claim 9, wherein the laser comprises a Nd:YAG laser.

11. The device of claim 8, wherein the optical fiber comprises a distal end that is configured to insert into a gingival sulcus, and wherein the distal end comprises the tip and is configured to disperse light energy pulses laterally.

12. The device of claim 11, wherein the distal end is tapered to provide lateral dispersion of light energy.

13. The device of claim 8, wherein the applicator further comprises a handpiece releasably connected to the periodontal probe.

14. The device of claim 13, wherein the optical fiber comprises a light receiver configured to mate with a terminus of a light delivery system in the hand piece.

15. The device of claim 8, further comprising markings along the tip for indicating a depth of a gingival sulcus into which the tip is inserted.
